## Europäisches Patentamt

## European Patent Office

## Office européen des brevets

(11) Veröffentlichungsnummer: **0 056 836**
**A2**

(12) # EUROPÄISCHE PATENTANMELDUNG

(21) Anmeldenummer: 81103758.9

(22) Anmeldetag: 15.05.81

(51) Int. Cl.³: **F 03 B 13/12**

(30) Priorität: 27.01.81 ES 498826

(43) Veröffentlichungstag der Anmeldung:
04.08.82 Patentblatt 82/31

(84) Benannte Vertragsstaaten:
BE DE FR GB IT NL SE

(71) Anmelder: Parra, José Martinez
Calle Salitre 33-1 Edificio Juan XXIII
Cartagena (Murcia)(ES)

(72) Erfinder: Parra, José Martinez
Calle Salitre 33-1 Edificio Juan XXIII
Cartagena (Murcia)(ES)

(74) Vertreter: Vossius Vossius Tauchner Heunemann Rauh
Siebertstrasse 4 P.O. Box 86 07 67
D-8000 München 86(DE)

(54) **Vorrichtung zur Erzeugung von elektrischer Energie auf einer schwimmenden Basis durch Ausnutzung und Steuerung der potentiellen Energie des Meerwassers.**

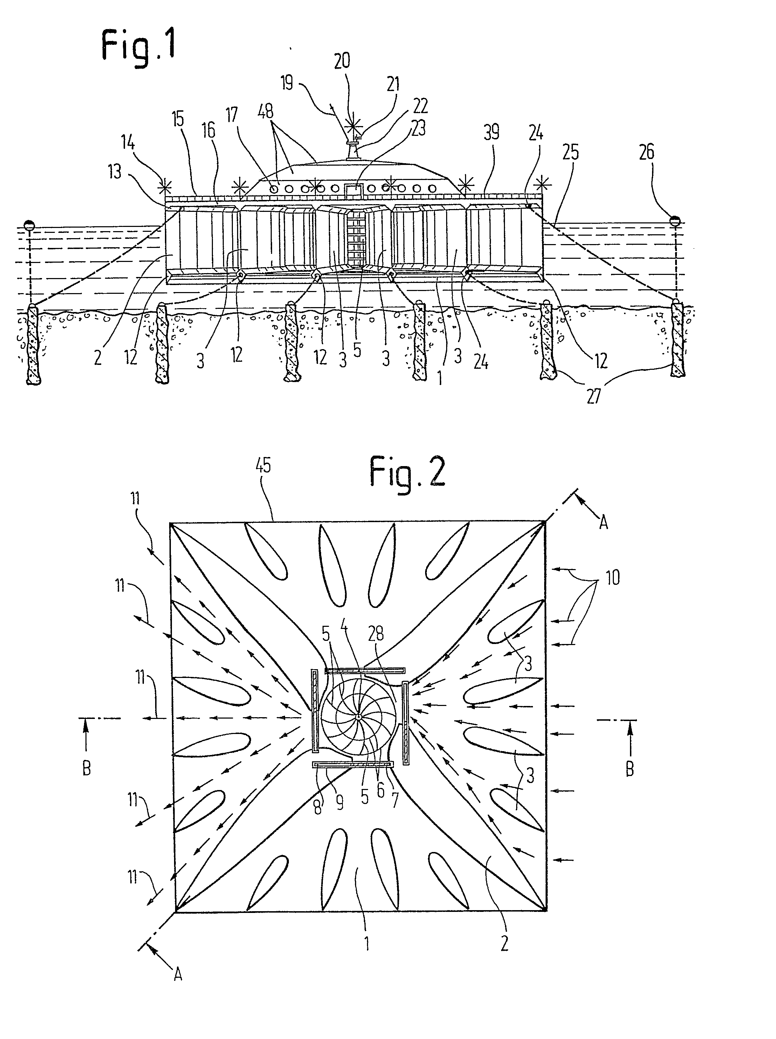

(57) Gegenstand der Erfindung ist eine Vorrichtung zur Erzeugung von elektrischer Energie auf einer schwimmenden Basis durch Ausnutzung und Steuerung der Energie des Meereswassers, die eine untere schwimmende Plattform (1) und ein Hauptdeck (39) aufweist, die durch Träger (2) und (3) miteinander verbunden sind, wobei sich im Zentrum der Vorrichtung zwischen der unteren Plattform (1) und dem Hauptdeck (39) ein Flügelrad (5) mit vertikaler Achse (4) befindet, durch die die Bewegungsenergie des Flügelrades (5) auf eine Einrichtung zur Umwandlung von Bewegungsenergie in elektrische Engergie übertragen wird, die sich auf dem Hauptdeck (39) befindet. Die Träger (2) weisen unterschiedlich gekrümmte Seitenwände auf. Sie unterteilen die Vorrichtung in mehrere Sektoren und konzentrieren die Bewegung des Wassers in Richtung auf das Flügelrad (5). Am Eingang zu dem Raum, in dem sich das Flügelrad (5) befindet, sind Tore (7) vorgesehen, mit denen der Zutritt und Ausgang des Wassers gesteuert wird Langs der Stoßkanten der Haupt- und Zwischenträger (2) bzw. (3) mit der unteren schwimmenden Plattform (1) und dem Hauptdeck (39), sowie an der Unterseite der schwimmenden Plattform (1) umlaufend, um diese, und radial ausgerichtet unter den Stoßkanten der Träger (2), (3) mit der Plattform (1) sind besondere Verstärkungen vorgesehen. Die Vorrichtung ist an Betonpfeilern verankert, die in den felsigen Meeresboden eingelassen sind; vgl. Figur 1.

Fig.1

0056836

VOSSIUS · VOSSIUS · TAUCHNER
HEUNEMANN · RAUH
PATENTANWÄLTE
SIEBERTSTR. 4, 8000 MÜNCHEN 80
TEL. (089) 47 40 75

u.Z.: R 103 EP (Ra/kä)
(498 826)
JOSE MARTINEZ PARRA, Cartagena, Murcia, Spanien

" Vorrichtung zur Erzeugung von elektrischer Energie auf einer schwimmenden Basis durch Ausnutzung und Steuerung der potentiellen Energie des Meerwassers "

Gegenstand der Erfindung ist eine Vorrichtung zur Erzeugung von elektrischer Energie auf einer schwimmenden Basis durch Ausnutzung und Steuerung der Energie des Meereswassers.

Die Umwandlung der Bewegungsenergie eines sich drehenden Flügelrades oder Rotors mittels eines Generators in elektrische Energie ist bekannt. Wenn jedoch das Flügelrad oder der Rotor durch das Meereswasser in eine Drehbewegung versetzt werden soll, ergeben sich eine Reihe von Schwierigkeiten, wenn die Erzeugung von elektrischer Energie in größerem Maßstab beabsichtigt ist. Dann sind nämlich großdimensionierte Anlagen erforderlich, um eine ausreichende Menge an bewegtem Wasser und damit an Energie erfassen zu können. Insbesondere infolge der ungleichmäßigen Stärke der Bewegungen des Meereswassers treten bei Anlagen mit großen Dimensionen erhebliche Probleme mit der Stabilität der Anordnungen auf. Bei starkem Seegang besteht überdies die Gefahr, daß großdimensionierte Anlagen zerstört werden, falls sie nicht über ausreichende Stabilität verfügen.

Die Gewinnung von elektrischer Energie durch Ausnutzung der Energie des Meereswassers ist derzeit aus den vorstehend genannten Gründen auf Anlagen beschränkt, in denen die potentielle Energie des durch die Flut angehobenen Wassers beim Rückströmen ausgenutzt wird. Derartige Gezeitenkraftwerke sind jedoch auf wenige Stellen der Meeresküsten beschränkt, an denen ein ausreichender Unterschied in der Wasserhöhe zwischen Ebbe und Flut besteht.

Der Erfindung liegt die Aufgabe zugrunde, eine Vorrichtung zur Erzeugung von elektrischer Energie auf einer schwimmenden Basis durch Ausnutzung und Steuerung der Energie des Meereswassers zu schaffen, die in stabiler Bauweise als großdimensionierte Anlage ausgeführt werden kann und bei der die Strömungen und Bewegungen des Meereswassers unabhängig von Ebbe und Flut zur Energiegewinnung ausgenutzt werden können, und zwar unabhängig von der Richtung, aus der die Bewegungen oder Strömungen des Meereswassers kommen. Die angestrebte Vorrichtung soll überdies ausreichende Stabilität aufweisen, um auch schwerem Seegang standhalten zu können. Diese Aufgabe wird durch die Erfindung gelöst.

Gegenstand der Erfindung ist demnach eine Vorrichtung zur Erzeugung von elektrischer Energie durch Ausnutzung und Steuerung der Energie des Meereswassers, die gekennzeichnet ist durch eine untere schwimmende Plattform und ein Hauptdeck, die durch Träger miteinander verbunden sind, und ein im Zentrum der Vorrichtung zwischen der unteren Plattform und dem Hauptdeck angeordnetes Flügelrad, das eine vertikale Achse aufweist, durch die die Bewegungsenergie des Flügelrades auf eine Einrichtung zur Umwandlung von Bewegungsenergie in elektrische Energie übertragen wird.

Die Vorrichtung der Erfindung ermöglicht die Erzeugung von elektrischer Energie durch Ausnutzung und Steuerung der Energie des Meereswassers in wirtschaftlicher Weise, da durch die Vorrichtung eine Regulierung und Konzentration der Bewegungen des Wassers in Richtung auf das Flügelrad erreicht wird. Infolge der Konzentrrierung gelangt das Wasser in der Vorrichtung der Erfindung mit einer im Vergleich zur Umgebung erheblich erhöhten Geschwindigkeit auf das Flügelrad. Durch die an den Eingängen zum Raum des Flügelrades vorgesehenen Tore kann der Zutritt des Wassers je nach Bedarf gesteuert werden. Ein besonders wesentliches Merkmal der Erfindung besteht schließlich darin, daß das Wasser durch die Konstruktion der Vorrichtung, insbesondere die Krümmung der Seitenwände der Träger in Richtung auf die konkaven Flächen der Flügel des Flügelrades geleitet und konzentriert wird. Schließlich ist auch das Flügelrad selbst durch seine Konstruktion ein wesentliches Merkmal der Erfindung, da es zur Verbindung der Flügel untereinander und mit der Achse großdimensionierte horizontale Platten aufweist, die gleichzeitig als Schwungräder wirken.

Infolge ihrer stabilen Bauart, die durch an bestimmten Stellen vorgesehene Verstärkungen noch erhöht wird, ermöglicht die Vorrichtung der Erfindung eine Ausführung in sehr großer Dimension und damit die Gewinnung einer erheblichen Menge an elektrischer Energie durch Nutzbarmachung einer großen Menge an Energie des bewegten Meereswassers. Die Reibungsverluste der Vorrichtung der Erfindung werden durch die vorgesehene Ausführung des Flügelrades möglichst gering gehalten, so daß ein hoher Wirkungsgrad der Umwandlung der Bewegungsenergie des Flügelrades in elektrische Energie erreicht werden kann.

Eine Ausführungsform der Vorrichtung der Erfindung zur Erzeugung von elektrischer Energie auf einer schwimmenden Basis durch Ausnutzung und Steuerung der Energie des Meereswassers ist in den beiliegenden Figuren dargestellt. Es zeigen:

Figur 1 eine Seitenansicht;

Figur 2 einen horizontalen Querschnitt durch die Vorrichtung in Höhe des Flügelrades

Figur 3 einen horizontalen Querschnitt durch die Vorrichtung in Höhe der Maschinenebene;

Figur 4 einen vertikalen Querschnitt durch die Vorrichtung längs der Linie A-A von Figur 2;

Figur 5 einen vertikalen Querschnitt durch die Vorrichtung längs der Linie B-B von Figur 2; und

Figur 6 eine Aufsicht auf die Vorrichtung der Erfindung.

Die schwimmende Basis wird an geeigneten Plätzen festgemacht, in küstennahen Zonen, wo die Dauerhaftigkeit der Meeresströmungen günstig ist, der Meeresboden sich in einer geeigneten Tiefe befindet, der Grund des Meeres ausreichend fest und kompakt ist und möglicherweise aus Kalkstein besteht. Geeignet sind Plätze, wo diese schwimmenden Basen verankert werden können, beispielsweise auf Meeresflächen, die sich zwischen der Küste und etwa 1 km von der Linie des Abfalls des Festlandsockels befinden. Bevorzugt ist eine möglichst geringe Entfernung von der Küste, um die Länge der elektrischen Untermeereskabel zu vermindern, welche die elektrische Energie, die erzeugt wird, zu den Transformatorparks auf fester Erde leiten müssen.

Die Vorrichtung der Erfindung besteht aus einem Schwimmkörper aus Metall, der ein Höchstmaß an Sicherheit bietet. Sie wird nachstehend anhand einer bevorzugten Ausführungsform erläutert, bei der die untere schwimmende Plattform eine viereckige Oberfläche aufweist und sich auf ihr vier Hauptträger befinden, die die Vorrichtung in vier Sektoren unterteilen. Die Erfindung ist jedoch nicht auf diese Ausführungsform beschränkt, sondern es sind auch andere polygonale Formen der Vorrichtung mit einer entsprechenden Anzahl von Trägern und Sektoren möglich und Gegenstand der Erfindung.

Innerhalb der Oberfläche eines jeden Sektors sind vier weitere Zwischenträger angeordnet, die eine kleinere Oberfläche als die vorstehend genannten Hauptträger aufweisen. Sie befinden sich in radialer Anordnung zum Zentrum der Basis.

Das Hauptdeck besitzt quadratische Oberfläche und deckt sich mit der unteren schwimmenden Ebene. Neben anderen Aufgaben verbindet und verstrebt es den gesamten Aufbau der Haupt- und Zwischenträger.

Auf dem Hauptdeck befindet sich die Maschinenebene mit den Generatoren zur Erzeugung der elektrischen Energie. Ihre Oberfläche hat quadratische Form. Sie bedeckt den mittleren Teil der Einrichtung. Ihr Dach wird von einer Kuppel mit quadratischen Maßen gebildet, deren Oberflächen, Aufrisse und Schnitte in den Figuren erläutert werden. Diese Ausführungsform der oberen Verstrebungen ergibt bei geringstmöglichem Widerstand für den Wind gleichzeitig einen Vorteil im Bezug auf die erforderliche Bauzeit und die Arbeitskosten.

Die Maschinenebene ist in ihrem gesamten äußeren Umfang von einer weiten Abdeckung umgeben, welche Teil des Gesamtaufbaues ist. Sie dient als Kai für das Anlegen aller Wasserfahrzeuge, die irgendeine Art von Maschineneinrichtung für den Aufbau zu transportieren haben. Sie verfügt ferner über verschiedene Plätze, die in bestimmter Weise windgeschützt sind, um für einen Hubschrauberdienst zur Verfügung zu stehen.

Zwischen der unteren schwimmenden Plattform und dem Hauptdeck befindet sich ein Flügelrad innerhalb eines Raumes mit vier Toren zum Öffnen und Schließen des Eingangs und Ausgangs des in Bewegung befindlichen Wassers, je nach der Richtung, aus der es kommt.

Es ist vorgesehen, daß die Oberseite der unteren schwimmenden Plattform und die Unterseite des Hauptdecks im Verhältnis zum Meeresspiegel geneigt sind, damit sie in Zusammenwirkung mit den Bugteilen und den Krümmungen der schwimmenden Hauptträger, die die Einrichtung in vier Sektoren teilen, die Energie, die die Bewegungen des Meereswassers enthalten, in Richtung auf den Raum regulieren und konzentrieren, in dem sich das Flügelrad befindet. Gleichzeitig werden mit diesen geneigten Oberflächen die nötigen Dicken erreicht, die für die Verstärkungen der unteren schwimmenden Plattform und des Hauptdecks ebenso wie für den Raum ausreichend sind, die das vorher beschriebene Schaufelrad enthält. Diese Teile unterliegen infolge ihrer großen Dimensionen einer beträchtlichen Belastung.

An der Unterseite der unteren schwimmenden Plattform (am Kiel der schwimmenden Basis) sind mit der gleichen radialen Ausrichtung wie die Träger zwischen ihrem äußeren Punkt und dem Zentrum des Aufbaues unter dem Schaufelrad Aufbauverstärkungen mit dreieckigem Querschnitt vorgesehen, die einen Teil des strukturellen Ganzen der Einrichtung bilden. Diese Verstärkungen müssen zusammen mit einem ähnlichen Profil, das den gesamten äußeren Umfang der Unterseite der Basis umgibt, als Stabilisatoren für ihre Schwimmfähigkeit dienen.

An den Verbindungsstellen sämtlicher Träger mit der unteren schwimmenden Plattform und mit dem Hauptdeck ist die Verstärkung dieser Verbindungen mit Profilen mit dreieckigem Querschnitt vorgesehen. Diese Verstärkungen befinden sich sowohl an den oberen als auch an den unteren Enden der Träger. Damit wird eine gute Verspannung und die erforderliche Stabilität des Gesamtbaus erreicht.

Die Unterteilung des Raumes zwischen der unteren schwimmenden Plattform und dem Hauptdeck in vier Sektoren ermöglicht eine feste Anbringung dieses schwimmenden Elektrizitätswerks, da es die Strömungen oder Bewegungen des Meereswassers aus jeder beliebigen Richtung aufnehmen kann.

Die schwimmende Basis wird an einem Platz verankert, der möglichst günstig ist, um den besten Wirkungsgrad zu erreichen. Zu diesem Zweck werden pfahlartige Verankerungen aus bewehrtem Beton mit ausreichendem Durchmesser und große Tiefe erstellt. Die erforderliche Ausschachtung wird durch Bohren in festem, felsigem Untergrund am Meeresboden derart durchgeführt, daß die Ausschachtungen an ihren Wänden möglichst wenig glatte rutschige Stellen aufweisen. Die Wände sollen im Gegenteil ungeformte Höhlungen entlang ihrer Tiefe aufweisen. Möglicherweise ist es erforderlich, kleine Explosivladungen zu verwenden, um genügend Unebenheiten für das Einmauern des Betons zu erreichen, der "in situ" mit einem geeigneten Zement gegossen wird. Befestigt an der Stahlbewehrung der Pfähle und an ihren oberen Teilen sind Ringe entsprechender Größe vorgesehen, um an ihnen mit Stahlseilen die genannte schwimmende Basis zu verankern. Zur Kenntlichmachung der Position jedes Pfahls wird an dem Ring eines jeden von ihnen eine Positionsboje mit ihren entsprechenden Signaleinrichtungen befestigt.

Aufgrund der großen Breite und Höhe der Öffnung eines jeden Sektors und der möglichen tiefen Lage der Basis in Bezug auf die Wasserlinie wird die Nutzbarmachung einer beträchtlichen Menge von in Bewegung befindlichem Meereswasser ermöglicht. Zusammen mit der Konzentration dieser riesigen Wassermassen in Richtung auf die kleinere Eingangsöffnung des Raumes in dem sich das Flügelrad befindet, ergibt sich ein Potential, das genau zu berechnen schwierig ist.

Für die Steuerung der Menge und Intensität des Wassers sind vier auf Gleitbahnen bewegliche Tore vorgesehen, die mit mechanischen oder hydraulischen Mitteln bewegt werden. In jedem Sektor befindet sich am Eingang des Raumes, in dem das Flügelrad oder der Rotor angebracht ist, eines der Tore. Wenn die Wellen oder Meeresströmungen beispielsweise aus dem nördlichen Sektor kommen, kann mit dem Tor des nördlichen Sektors der Zutritt des Wassers je nach seiner Geschwindigkeit und Stärke gesteuert werden.

Die Tore der Sektoren, die nach Osten und nach Westen orientiert sind, bleiben geschlossen und das südliche in ausreichendem Maß offen, um eine möglichst angenähert konstante Umdrehung des Flugelrades zu erreichen, das sich in der erwähnten Kammer befindet.

Aufgrund des beträchtlichen Tiefgangs, der bei diesem schwimmenden Elektrizitätswerk in Betriebsstellung vorgesehen ist, können diese schwimmenden Basen nicht in einem normalen Hafen oder in einer Werft gebaut werden.

Um die Strömungen des Wassers in mittlerer Tiefe nutzbar machen zu können, ist vorgesehen, daß die schwimmenden Basen über ein regulierbares System von Wasserkammern verfügen, die ihr Absenken in die gewünschte Tiefe ermöglichen. Dadurch können die Basen in einem Trockendock gebaut werden, das tatsächlich nur mit sehr geringer Tiefe erstellt werden muß. Außerdem können sie von jedem beliebigen Punkt abgeschleppt werden und drittens können die schwimmenden Basen, wenn sie einmal an ihren bestimmten Platz geschleppt sind, je nach Notwendigkeit abgesenkt oder angehoben werden, um so weit wie möglich die Bewegungen des Meereswassers nutzbar zu machen, natürlich innerhalb der Dimension ihrer Einströmoffnungen.

Dafür muß die Vorrichtung mit einer Reihe von Ballasttanks für Kompensation und Gleichgewicht ausgerüstet werden, damit sie in jedem Augenblick auf die notwendige oder gewünschte Tiefe abgesenkt oder angehoben werden kann.

Das Flügelrad aus zerlegbaren Teilen besteht aus Flügeln, die in horizontaler Richtung gekrümmt und mit einer zentralen vertikalen Achse verbunden und durch Stahlplatten in horizontaler Richtung verspannt sind, welche ihrerseits die Wirkung von Schwungrädern annehmen.

Das Flügelrad befindet sich in dem Raum im Zentrum der Vorrichtung zwischen der Oberseite der quadratischen schwimmenden Basis und der Unterseite des Hauptdecks. Das erwähnte Flügelrad wird von verschiedenen Gleitlagern in Form von Schienen getragen, die ihrerseits als Führungen für seine Drehbewegung dienen. Sie befinden sich auf dem Baukomplex der Oberseite der unteren schwimmenden Plattform der Einrichtung und sind so ausgebildet, daß die Reibung auf diesen Schienen so gering wie möglich ist, wobei gleichzeitig die größte Sicherheit und Stabilität erreicht wird.

Die Geschwindigkeit der Drehung des Flügelrades wird durch eine zentrale vertikale Achse auf ein zentrales Getriebe übertragen. Ihr unteres, kugelförmiges Ende stützt sich auf ein großdimensioniertes Bauteil aus Gußstahl, das als Stützlager ausgebildet ist. Dadurch wird der obere Teil der schwimmenden Basis mit dem Unterteil der Einrichtung verbunden. Verschiedene Lagerbänder befinden sich im Durchgang der Achse durch das Hauptdeck.

Ein Getriebe, das die Bewegungskraft aufnimmt, die von der zentralen Achse übertragen wird, überträgt diese ihrerseits auf eine oder zwei automatische Drehzahlsteuerungen, damit am Generator oder an den Generatoren eine konstante Drehzahl ankommt.

Zwei Elektrizitäts-Generatoren, die gleichzeitig oder abwechselnd betrieben werden können, überführen die Energie, die sie erzeugen, mittels Unterseekabeln zu einem Transformatorpark, der sich auf festem Boden befindet.

Von besonderer Bedeutung innerhalb der Vorrichtung der Erfindung ist demnach die Konstruktion des Schwimmkörpers mit den folgenden Hauptelementen:

a) Die untere schwimmende Plattform, deren Oberseite von außen in Richtung auf das Zentrum der Vorrichtung ansteigt;

b) Das Hauptdeck, dessen Unterseite von außen in Richtung auf das Zentrum der Anlage nach unten verläuft;

c) Die Hauptträger, die zwischen der unteren schwimmenden Plattform und dem Hauptdeck senkrecht zu diesen angeordnet und mit ihnen verbunden sind und die radial von den Ecken der unteren schwimmenden Plattform bzw. des Hauptdeckes aus in Richtung auf das Zentrum der Anlage hin verlaufen;

d) Besondere Verstärkungen auf dreieckigem Profil längs der Stoßkanten der Haupt- und Zwischenträger mit der unteren schwimmenden Plattform und dem Hauptdeck; weitere ähnlich profilierte Verstärkungen an der Unterseite der unteren schwimmenden Plattform umlaufend um diese und ferner radial ausgerichtete unter den Stoßkanten der Träger mit der Plattform;

e) Das Flügelrad mit vertikaler Achse und in horizontaler Richtung gekrümmten Flügeln oder Schaufeln, das im Zentrum der Vorrichtung zwischen der unteren schwimmenden Plattform und dem Hauptdeck angeordnet ist in einem Raum, der teilweise von den Wänden der Hauptträger begrenzt wird;

f) Die unterschiedliche Krümmung der Seitenwände der Hauptträger, die für die Regulierung und Konzentrierung des bewegten Wassers in Richtung auf die konkaven Oberflächen der Flügel des Flügelrades sorgen;

g) Die Tore, die an den Eingängen zu dem Raum vorgesehen sind, in dem sich das Flügelrad befindet, und die durch ihre Öffnung bzw. Schließung die Steuerung des Zutritts des Wassers zum Flügelrad ermöglichen, wobei sie beim Öffnen in Schlitzen verschwinden, die in den Hauptträgern vorgesehen sind;

h) Die schwimmende Basis enthält Einrichtungen, die ihr Absenken oder Anheben auf die jeweils günstigste Eintauchtiefe ermöglichen;

i) Die Vorrichtung ist an einer Mehrzahl von groß dimensionierten Betonpfeilern verankert, die in den vorzugsweise felsigen Meeresboden eingelassen sind.

Die vorstehend erläuterte Bauweise des Schwimmkörpers der erfindungsgemäßen Vorrichtung ermöglicht infolge der weiten Öffnungen der Sektoren an ihrer Außenseite die Aufnahme einer großen Menge Meereswasser, dessen Bewegung bzw. Strömung durch die rasche Abnahme des Querschnittes seines Strömungsweges stark beschleunigt wird. Damit wird auch bei einem Wellengang, der in der Umgebung der Anlage als verhältnismäßig schwach erscheint, die Nutzbarmachung einer großen Menge an Bewegungsenergie und ihre Umwandlung in elektrische Energie in wirtschaftlicher Weise ermöglicht.

Das Flügelrad im Zentrum der Vorrichtung der Erfindung besteht aus zerlegbaren Elementen. Seine Flügel oder Schaufeln sind in horizontaler Richtung gekrümmt. Ihre Anzahl ist nicht besonders begrenzt. Bevorzugt sind jedoch Flügelräder mit einer größeren Zahl von Flügeln, beispielsweise mindestens 10. Besonders bevorzugt ist eine Ausführungsform mit 12 Flügeln. Die Flügel sind mit ihrer zentralen Achse verbunden und durch Platten aus Stahl horizontal versteift, welche zugleich die Funktion von Schwungrädern haben und dem Flügelrad eine höhere Trägheit verleihen. Auch die Anzahl dieser versteifenden Platten ist nicht besonders begrenzt. Eine Ausführungsform der Erfindung weist beispielsweise acht derartige Platten auf. An ihrer Unterkante oder über die unterste Platte werden die Flügel auf Lagerstreifen gehalten, die der Führung des Flügelrades bei seiner Drehung dienen. Sie sind mit dem Aufbau derart verbunden, daß die Reibung des Flügelrades auf diesen Schienen so gering wie möglich ist, während gleichzeitig große Sicherheit in Führung und Stabilität erreicht wird.

Zur Übertragung der Bewegungsenergie des Flügelrades dient seine zentrale Achse. Diese ist an ihrem unteren Ende in einem Lager abgestützt, das sich in der unteren schwimmenden Plattform befindet. Mit ihrem oberen Ende durchstößt die Achse das Hauptdeck. Auch in diesem Bereich sind Lager für das reibungsvermindernde Drehen der Achse vorgesehen. Die Achse endet in einem zentralen Getriebe auf dem Maschinendeck der Vorrichtung. Von diesem wird die Bewegung über horizontale Achsen auf Einrichtungen zur automatischen Steuerung der Drehzahl des Flügelrades und/oder der nachgeschalteten Generatoren zur Erzeugung von elektrischer Energie übertragen, um optimale Betriebsbedingungen im Hinblick auf die gegebene Stärke der Bewegung des Meereswassers zu erzielen. Falls diese Generatoren Gleichstromgeneratoren sind, können ihnen elektro-mechanisch oder elektronisch arbeitende Wechselstromerzeuger, wie Gleichstrom-Wechselstrom-Wandler (Gleichstrommotor mit nachgeschaltetem Wechselstromgenerator) oder Wechselrichter nachgeschaltet werden. Die erzeugte Energie wird über unterseeische Kabel zu einem Transformatorenpark verbracht, der sich auf dem Festland befindet.

Die Vorrichtung der Erfindung wird nun anhand der in der Zeichnung dargestellten Ausführungsform näher erläutert.

Figur 1 zeigt schematisch eine Seitenansicht der Vorrichtung der Erfindung mit Blick auf die Öffnung eines von vier Sektoren. Mit 1 ist die untere schwimmende Plattform mit quadratischer Fläche bezeichnet, die den Boden der Vorrichtung bildet. Auf ihr befinden sich die Hauptträger 2, die die Vorrichtung in vier Sektoren teilen, sowie die Zwischenträger 3, von denen vier in jedem Sektor senkrecht zu dessen Öffnung angeordnet sind. Die Träger verbinden die Oberseite der unteren Plattform 1 mit der Unterseite des Hauptdecks 39 und dienen der Stabilisierung der gesamten Anlage. An den Stoßkanten der Haupt- und Zwischenträger 2 und 3 mit der schwimmenden Plattform 1 und dem Hauptdeck 39 sind Verstärkungsprofile 12 bzw. 13 vorgesehen. Durch diesen strukturellen Aufbau wird die Stabilität der Anlage erreicht. Das Hauptdeck 39 ist zugleich Abdeckung des schwimmenden Teils der Vorrichtung. Es enthält die Plattform, auf der sich der Maschinenpark zur Erzeugung von Elektrizität befindet. Das Hauptdeck 39 dient außerdem als Anlegeplatz.

Auf dem Hauptdeck 39, das einen mit 16 bezeichneten Hohlraum aufweist, befindet sich ein pyramidenförmiger Aufbau 48, der die Maschinenanlage aufnimmt. Er hat einen quadratischen Grundriß. Seine Abdeckung wird stufenförmig von unten nach oben flacher. Auf dem Aufbau 48 befindet sich ein Mast 22, der eine Nachrichtenantenne 19, ein Leuchtfeuer 20 und eine Einrichtung 21 zur Messung der Windgeschwindigkeit trägt.

Die Licht- und Belüftungsöffnungen des pyramidenförmigen Aufbaus 39 sind mit 17 und die Zugänge mit 23 bezeichnet. Eine um das Hauptdeck umlaufende Reeling trägt die Bezeichnung 15. An ihr sind Vorrichtungen 14 zur Positionsanzeige angebracht. Die gesamte Vorrichtung ist über Ketten 25 aus Stahl an Betonpfeilern 27 verankert, die ihrerseits in den Meeresgrund eingelassen sind. 24 bezeichnet die Verankerung der Ketten an den äußeren Enden der Verstärkungen 12. Bojen 26 markieren die Position der Pfeiler 27.

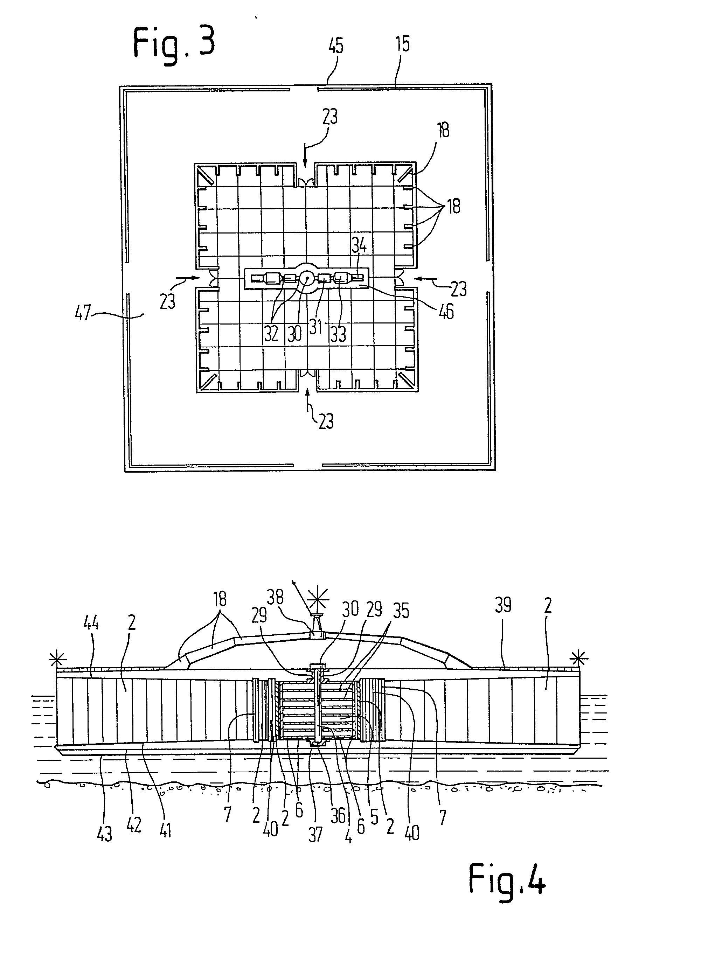

Figur 2 zeigt schematisch einen horizontalen Querschnitt durch die Vorrichtung der Erfindung in Höhe des Flügelrades 5. In dieser Figur sind die Träger 2 und 3 im Querschnitt zu erkennen. Der Eintritt des Wassers in die Vorrichtung wird durch die Pfeile 10, der Austritt durch die Pfeile 11 angezeigt. Durch die gewölbten vertikalen Seitenwände der Träger 2 erfolgt eine Konzentrierung und Steuerung des Wassers in Richtung auf den Raum 28, in dem sich das Flügelrad 5 befindet. Der Raum 28 wird teilweise von den vertikalen Flächen der Träger 2 und zum anderen Teil von den Schiebetoren 7 begrenzt. In Figur 3 sind das obere und das untere Schiebetor geschlossen, während das linke und das rechte offen sind. Dies entspricht der angegebenen Strömung des Wassers. Beim Öffnen der Schiebetore 7, das mit mechanischen oder hydraulischen Mitteln bewirkt werden kann, werden diese auf Schienen 8 bewegt und verschwinden in Schlitzen 9 innerhalb der Träger 2.

Figur 3 zeigt schematisch einen horizontalen Querschnitt durch die Vorrichtung der Erfindung in Höhe der Maschinenebene. In dieser Figur ist der quadratische Grundriß des pyramidenförmigen Aufbaus 48 mit seinen Eingängen 23 und den tragenden Rippen 18 zu sehen. Der pyramidenförmige Aufbau 48 befindet sich auf dem Hauptdeck 39, das von der Reeling 15 umgeben ist, dessen äußerer Umfang durch die Linie 45 und dessen Oberseite mit 47 bezeichnet ist. In dem Aufbau 48 befindet sich der Maschinenteil der Anlage auf einer Plattform 46, die vom Rest des Hauptdecks 39 isoliert ist, um Vibrationen absorbieren zu können.

Mittelteil der Maschinenanlage ist ein zentrales Getriebe 30, das die Bewegung der vertikalen Achse 4 des Flügelrades 5 aufnimmt. Von dort gelangt die Bewegungsenergie über eine horizontale Achse 32 zu Einrichtungen 31 für die automatische Steuerung der Drehzahl und dann zu Generatoren 33 zur Erzeugung von elektrischer Energie. Mit 34 werden Wechselstromerzeuger und Verbindungskästen für die Kabel bezeichnet, die die elektrische Energie abführen und über Untermeereskabel zu einer Transformatorstation leiten, die sich auf festem Boden befindet.

Figur 4 zeigt schematisch einen vertikalen Querschnitt durch die Vorrichtung der Erfindung in diagonaler Richtung längs der Linie A-A von Figur 2. In dieser Figur ist das Flügelrad 5 mit seiner vertikalen Achse 4 zu sehen. Das abgerundete untere Ende 36 der Achse ist in einer Halterung 37 aus Spezialstahl in der unteren schwimmenden Plattform 1 abgestützt, wo sich auch ihre unteren Lager befinden. Oberhalb des Flügelrades 5 durchstößt sie das Hauptdeck 39. In diesem Bereich sind Lager 29 vorgesehen.

Die Flügel oder Schaufeln des Flügelrades 5 sind in horizontaler Richtung gekrümmt. Sie bestehen aus abnehmbaren Teilen aus Spezialstahl, die mit der Achse 4 über Stahlplatten 35 verbunden sind, die in horizontaler Ebene angeordnet sind. Diese Platten 35 zur Verankerung der Flügel des Flügelrades 5 bestehen aus Spezialstahl. Sie halten die Flügel untereinander und mit der Achse in Verankerung und dienen gleichzeitig als Schwungräder und Elemente der Festigkeit des Flügelrades 5. Das Flügelrad ist auf kreisförmigen Lagerstreifen 6 abgestützt. 40 bezeichnet die Seitenwände (Schotts) der Schlitze innerhalb der Hauptträger 2, in die die Tore 7 beim Öffnen verschwinden. 41 ist die Stoßkante der unteren Plattform 1 mit den Trägern 2 bzw. 3. Mit 42 ist der Kiel der Vorrichtung bezeichnet und 43 zeigt die Unterkante der Verstärkung 12. Die Stoßkante der Träger 2 bzw. 3 mit der Unterseite des Hauptdecks 39 ist mit 44 bezeichnet. 38 bedeutet eine Verstärkung am höchsten Punkt des Aufbaus 48, in dem sich die Rippen 18 treffen.

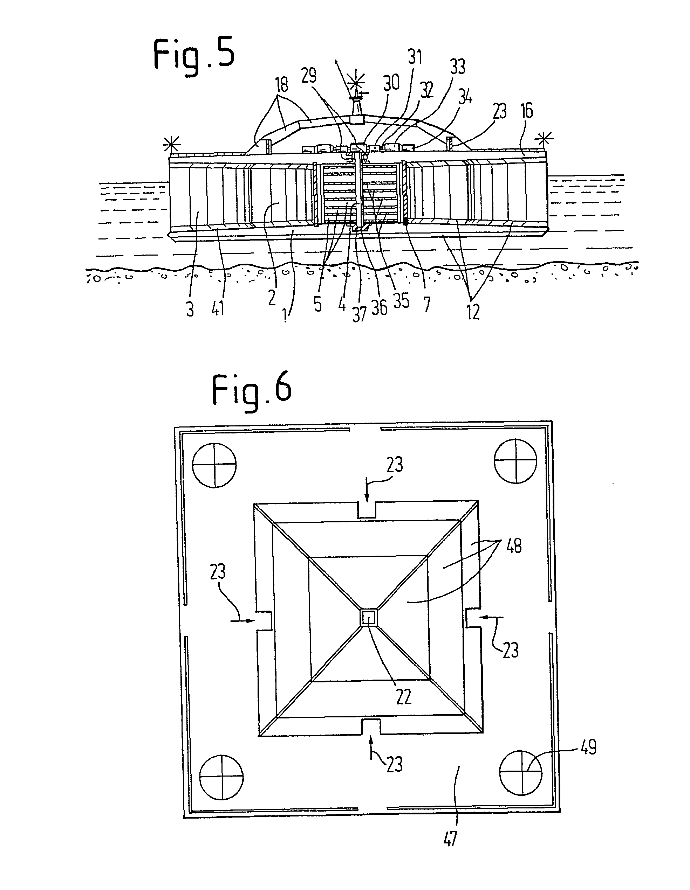

Figur 5 zeigt schematisch einen vertikalen Querschnitt durch die Vorrichtung der Erfindung längs der Linie B-B von Figur 2. In Figur 5 ist ebenfalls der Aufbau des Flügelrades 5 mit seiner Achse 4 sowie die Maschineneinrichtung 30-34 zu erkennen.

Figur 6 zeigt schematisch eine Aufsicht auf die Vorrichtung der Erfindung. Auf der Oberseite 47 des Hauptdecks 99 befindet sich der pyramidenförmige Aufbau 48 mit seinen Eingängen 23 und dem Mast 22 auf seinem höchsten Punkt. Mit 49 sind Hubschrauberlandeplätze bezeichnet.

Das Beispiel erläutert die Erfindung.

B e i s p i e l

In einer konkreten Ausführungsform hat die Vorrichtung zur Erzeugung von elektrischer Energie durch Ausnutzung und Steuerung der Energie des Meereswassers die in den Figuren dargestellte Form. Die untere schwimmende Plattform und das Hauptdeck weisen quadratische Form auf. Die Vorrichtung wird durch vier Hauptträger in vier Sektoren eingeteilt. In jedem Sektor befinden sich vier Zwischenträger. Die Öffnung jedes Sektors hat an ihrer Außenseite eine Breite von etwa 250 m und eine Höhe von etwa 44 m. Diese für den Eintritt des Wassers offene Fläche verengt sich in Richtung auf das Zentrum der Anlage, so daß die Öffnung an der Stelle, wo sich das Tor befindet, nur mehr 24 x 38 m ausmacht. Auf diese Weise wird eine erhebliche Erhöhung der Geschwindigkeit des bewegten Wassers erreicht.

Das Flügelrad im Zentrum der Vorrichtung hat einen Durchmesser von etwa 50 m und eine Höhe von 36 m. Es besteht aus zerlegbaren Elementen und weist 12 Flügel und 8 horizontale Verstrebungs-Platten auf.

Die Vorrichtung ist an 20 Betonpfeilern verankert, die einen Durchmesser von etwa 1 m aufweisen, und etwa 25 m tief in den Meeresboden eingelassen sind.

<u>Patentansprüche</u>

1. Vorrichtung zur Erzeugung von elektrischer Energie durch Ausnutzung und Steuerung der Energie des Meereswassers, g e k e n n z e i c h n e t durch eine untere schwimmende Plattform (1) und ein Hauptdeck (39), die durch Träger (2) und (3) miteinander verbunden sind, und ein im Zentrum der Vorrichtung zwischen der unteren Plattform (1) und dem Hauptdeck (39) angeordnetes Flügelrades (5), das eine vertikale Achse (4) aufweist, durch die die Bewegungsenergie des Flügelrades (5) auf eine Einrichtung zur Umwandlung von Bewegungsenergie in elektrische Energie übertragen wird.

2. Vorrichtung nach Anspruch 1, dadurch gekennzeichnet, daß die Einrichtung zur Umwandlung von Bewegungsenergie in elektrische Energie aus einem Getriebe (30), einer Einrichtung (31) zur automatischen Steuerung der Drehzahl und Generatoren (33) zur Erzeugung der elektrischen Energie besteht.

3. Vorrichtung nach Anspruch 1 und 2, dadurch gekennzeichnet, daß die Träger (2) Hohlkörper sind, deren seitliche Wände von außen in Richtung auf das Zentrum der Anlage hin auseinanderlaufen, dabei in horizontaler Richtung unterschiedlich gekrümmt sind und sich vor dem Raum, in dem sich das Flügelrad (5) befindet, wieder vereinigen, wobei sie den Raum (28) bilden.

4. Vorrichtung nach Anspruch 1 bis 3, dadurch gekennzeichnet, daß das in die Vorrichtung einströmende Wasser einen Weg mit sich verengendem Querschnitt vorfindet, der durch die Oberseite der unteren Plattform (1) und die Unterseite des Hauptdecks (39), welche in Richtung auf das Zentrum hin trichterförmig nach oben bzw. nach unten verlaufen, sowie durch die unterschiedlich gewölbten vertikalen Seitenwände von zwei gegenüberliegenden Trägern (2) begrenzt wird und sich in der Öffnung des Eingangs in den Raum (28) konzentriert, in dem sich das Flügelrad (5) befindet.

5. Vorrichtung nach Anspruch 1 bis 4, dadurch gekennzeichnet, daß die Krümmung der vertikalen Wände der Träger (2) derart ausgebildet ist, daß das Wasser auf die konkaven Oberflächen der Flügel des Flügelrades (5) geleitet und konzentriert wird.

6. Vorrichtung nach Anspruch 1 bis 5, dadurch gekennzeichnet, daß vier Träger (2) vorgesehen sind, die die Vorrichtung in vier Sektoren unterteilen.

7. Vorrichtung nach Anspruch 1 bis 6, dadurch gekennzeichnet, daß die Öffnung zwischen der unteren Plattform (1) und dem Hauptdeck (39), sowie den zwei gegenüberliegenden vertikalen Seitenwänden von zwei Trägern (2) am Eingang in den Raum (28), in dem sich das Flügelrad (5) befindet, verschließbar ist.

8. Vorrichtung nach Anspruch 7, dadurch gekennzeichnet, daß das Verschließen mit Hilfe von Schiebetoren (7) erfolgt, die mechanisch oder hydraulisch bewegt werden.

9. Vorrichtung nach Anspruch 8, dadurch gekennzeichnet, daß die Schiebetore (7) beim Öffnen in Schlitzen (9) verschwinden, welche in den Trägern (2) vorgesehen sind.

10. Vorrichtung nach Anspruch 1 bis 9, dadurch gekennzeichnet, daß das Flügelrad (5) aus nur in einer Richtung gekrümmten Flügeln besteht, die über horizontale Platten (35) mit der Achse (4) verbunden sind.

11. Vorrichtung nach Anspruch 1 bis 10, dadurch gekennzeichnet, daß das Flügelrad (5) auf kreisförmigen Lagerstreifen (6) abgestützt ist.

12. Vorrichtung nach Anspruch 2 bis 11, dadurch gekennzeichnet, daß den Generatoren (39) Wechselstromerzeuger (34) nachgeschaltet sind.

13. Vorrichtung nach Anspruch 1 bis 12, dadurch gekennzeichnet, daß besondere Verstärkungen (12, 13) längs der Stoßkanten der Haupt- und Zwischenträger (2) bzw. (3) mit der unteren schwimmenden Plattform (1) und dem Hauptdeck (39), sowie an der Unterseite der schwimmenden Plattform (1) umlaufend um diese und ferner radial ausgerichtete unter den Stoßkanten der Träger (2), (3) mit der Plattform (1) vorgesehen sind.

14. Vorrichtung nach Anspruch 1 bis 13, dadurch gekennzeichnet, daß sie Einrichtungen aufweist, die ihr Absenken und Anheben auf die jeweils günstigste Eintauchtiefe ermöglichen.

0056836

15. Vorrichtung nach Anspruch 1 bis 14, dadurch gekennzeichnet, daß sie an einer Mehrzahl von Betonpfeilern verankert ist, die in den felsigen Meeresböden eingelassen sind.

## Fig.1

## Fig.2

Fig. 3

Fig. 4

Fig.5

Fig.6